# EUROPEAN PATENT SPECIFICATION

(11) **EP 2 327 973 B1**
(45) Date of publication and mention of the grant of the patent: **12.02.2020**
(21) Application number: 10191700.3
(22) Date of filing: 18.11.2010
(51) Int. Cl.: G01M 1/04, G01M 17/013, G01M 17/06

(54) **Apparatus and method for supplying a person with information for statically adjusting a motor vehicle equipped with wheels fitted with tyres.**
Vorrichtung und Verfahren zur Versorgung einer Person mit Informationen zur statischen Einstellung eines Motorfahrzeugs, das mit Rädern und Reifen ausgestattet ist
Appareil et procédé pour fournir à une personne des informations pour régler statiquement un véhicule à moteur équipé de roues avec des pneus

(30) Priority: 27.11.2009 IT BO20090769
(43) Date of publication of application: 01.06.2011
(73) Proprietor: NEXION S.p.A., 42015 Correggio (RE) (IT)
(72) Inventor: Corghi, Giulio, 42015, Correggio (Reggio Emilia) (IT)
(74) Representative: Conti, Marco

(56) References cited:
- EP-A2- 1 037 030
- US-A- 5 930 155
- US-A1- 2009 121 891
- US-B2- 7 320 246

## Description

This invention relates to an apparatus and a method for supplying a person with information for statically adjusting a motor vehicle equipped with wheels fitted with tyres.

The invention addresses the field of checking motor vehicles equipped with tyred wheels for the purpose of making adjustments to the vehicles; more specifically, the invention addresses the tyre service trade and equipment for tyre service shops. Prior art equipment in this field includes: vehicle attitude (i.e. wheel alignment) measuring systems, used to measure the characteristic angles of vehicle wheels, steering angles and so on; balancing machines, used to evaluate wheel imbalance both in terms of geometry and in terms of wheel response to mechanical stress; and tyre changers, used to mount and remove tyres on and from wheel rims.

Generally speaking, this invention relates to wheel service machines (especially, tyre changers, balancing machines, and wheel attitude systems) and to vehicle diagnostic devices (especially brake test benches and suspension test benches).

Current wheel service machines are devices that allow the conditions of the wheel (i.e. the wheel and tyre assembly) to be precisely analysed.

More specifically, balancing machines are typically used to measure wheel imbalance, to measure wheel profile and runout, that is, the deviation from the ideal profile (perfect roundness), and to measure wheel conicity which, in use, causes steering pull, and the deformation and drifting forces acting on the tyre.

It should be specified that the term "drift" applied to the wheel is used to mean both the effect of the wheel conicity and the effect of the lateral forces (parallel to the axis of rotation of the wheel) due to tyre deformation as a result of contact between the moving wheel and the road.

It should also be specified that the term "radial force" is used to mean the force applied to the wheel in radial direction as it rolls on the road surface. The measurement of the radial force can be used to calculate the measure of the elasticity of the wheel.

Some of these measurements can also be performed on tyre changing machines on which it is also possible to conveniently turn the tyre around the rim so as to minimize the effects that the tyre has on the wheel when it is not exactly symmetrical about the axis of rotation (this procedure is known as matching).

Matching procedures may involve optimizing the geometry or optimizing the imbalances: in the former case, rim and tyre profiles are analysed, in the latter case, their imbalances are analysed. Vehicle attitude measuring systems, as is known, make it possible to measure the geometry of the vehicle's chassis frame, that is, the characteristic attitude parameters, including characteristic wheel angles, wheel track and wheelbase and other parameters such as suspension length, for example.

Once the information on wheel conditions has been obtained and the vehicle's attitude measured, however, the tyre service person must rely on his own experience to determine the optimum vehicle configuration that also takes into account the placement of the wheels on the vehicle.

Moreover, it should be observed that in many cases the tyre service person does not have full and correct information regarding the vehicle to be adjusted and must proceed tentatively by approximations and estimations.

After the tyre service person has adjusted the vehicle, if the settings are incorrect, it won't be long before the vehicle has to be returned to the workshop and the work repeated. That obviously leads to dissatisfaction and is a nuisance for both the tyre service person and his customer (the owner of the vehicle).

That constitutes a drawback and a shortcoming of the equipment currently used by tyre service shops. Even in the absence of adjustment defects that are so serious as to be noticed immediately by the vehicle driver, incorrect settings will nevertheless cause difficulties connected, for example, to uneven tyre wear; these difficulties will inevitably lead to problems, even if not immediately noticeable to the driver, such as, for example, a faster rate of tyre wear.

It should be noted that faster tyre wear also means more particulates are released by the tyres during normal operation, which in turn means more pollution caused by the particulates released into the atmosphere.

Furthermore, an imperfect vehicle configuration may have serious consequences in terms of safety not only under normal driving conditions but also, and especially, in an emergency.

For example, some parameters linked to the wheel profile, the geometry of the chassis frame and the state of suspension (to cite but a few example) have a significant effect on braking distance.

Even vehicle stability is significantly influenced by vehicle setup in connection with the wheels, or rather, the tyres.

Prior art instruments for performing wheel and other vehicle measurements are therefore useful for tyre service persons but do not provide a direct aid which the tyre service person can use for adjusting the vehicle on the basis of the needs and requirements of the customer (that is, of the vehicle owner).

Some wheel service machines, such as the one described in patent document EP1300665, provide information (based on a set of predetermined rules) on wheel placement according to the lateral forces applied by the wheel when it is made to turn in contact with a measuring roller.

With these machines, however, the same type of uncertainty, inherent in human judgement, as to the actual efficacy of the adjustment is transferred to a system of predetermined rules.

Thus, for example, on account of a particular configuration of the vehicle or of its attitude settings, the suggested placements may not in all cases be the correct ones.

In the prior art, vehicle road behaviour simulators are known but are used typically for designing vehicles, wheel rims and tyres, as for example is the case of the solution described in patent document EP1297975.

Also known, for example from patent documents US6925865 and US2009/0121891, are simulators used to assist buyers in choosing the right tyres for their specific requirements.

These systems, too, however, fail to provide an effective aid for a tyre service person who is required to adjust the vehicle since they do not take into account the actual conditions of the vehicle being adjusted but instead use an abstract mathematical representation of the vehicle to perform a comparative evaluation of a plurality of tyres available to the manufacturer (all other conditions selectable on the basis of customer requirements being equal).

In effect, these systems are designed to facilitate the interaction between the buyer and the tyre manufacturer.

A system of this kind, therefore, is of no use to the tyre service person in choosing the work (that is, the adjustment) to be carried out on the vehicle; at most, the system might be useful to the tyre service person after he has decided the adjustment to be carried out and has found that the tyres should be changed (provided always that the owner of the vehicle is prepared to have the tyres changed, which by no means goes without saying). Only then, when it comes to choosing the type of tyre, would the tyre service person benefit from such a system (becoming, under these circumstances, a buyer, that is to say, a customer of the tyre manufacturer).

Also known in the prior art, for example from patent document US2007/0112477, is a system for dynamically correcting the parameters directly on the vehicle.

A system of this kind, however, is of no use to the tyre service person required to perform a static adjustment, that is to say, an adjustment with the vehicle stationary, with the possibility of acting on vehicle configurations that cannot normally be managed automatically by a control unit (such as for example, modifying tyre placement or geometry or vehicle wheel alignment).

Thus, none of the prior art solutions fully meets the requirement of a tyre service person to have a tool that allows him to take all wheel and vehicle measurements, process all the measured data and provide precise information on how to operate on the chassis frame and on the wheels.

From document US7320246 it is known a diagnostic system mounted on a motor vehicle in order to make projections about the wear of tyres or other faulty situations.

This system focuses on the data detected during the motion of the vehicle and on a simulation of the vehicle behavior and performance, based on a parametric model.

The system is also provided with a parameters updating process, in order to correct deficiencies of the model according to the data detection. However, this system cannot provide to the tyre service person any information about possible adjustments or tuning on the vehicle, obtainable with the use of the typical tyre service tools, in order to modify the vehicle configuration obtaining an improvement of the vehicle performances, with an evaluation criterion planned by the tyre service person in compliance with the customer needs.

This invention has for an aim to provide an apparatus and a method that overcome the above mentioned disadvantages of the prior art and that can supply a person, in particular a tyre service person, with information for statically adjusting a motor vehicle equipped with wheels fitted with tyres.

In particular, it is an aim of this invention to provide an apparatus and a method for supplying a person, in particular a tyre service person, with information for statically adjusting a motor vehicle equipped with wheels fitted with tyres and capable of giving the tyre service person information on the adjustment to be carried out on the vehicle on the basis of the vehicle owner's requirements and the vehicle's actual conditions. Another aim of the invention is to provide an apparatus and a method for supplying a person with information for statically adjusting a motor vehicle equipped with wheels fitted with tyres and capable of taking into account not only the requirements of the vehicle owner in terms of desired vehicle performance, but also any constraints or limitations on possible adjustments that can be carried out by the tyre service person (due for example to the owner's requirements or to the vehicle's actual conditions).

These aims are fully achieved by the apparatus and method according to the invention as characterized in the appended claims.

More specifically, the apparatus according to the invention is characterized in that it comprises:
- a data storage module with access to a database defining an operation model of a vehicle having a plurality of model parameters;
- a control module adapted to
   receive a value of at least one measurement parameter correlated with the on-road behaviour of the vehicle and measured in a static condition of the vehicle on at least one of the vehicle's wheels,
   set values of the model parameters according to the value measured for the measurement parameter in order to define a starting configuration of the model parameter values, and
   set at least one evaluation parameter correlated with the model parameters and representative of the vehicle's on-road behaviour;
- a processing module adapted to perform one or more simulations of the on-road behaviour of the vehicle using said model, while varying the value of at least one of the model parameters correlated with a condition of the wheels adjustable by the tyre service person, in order to determine a modified configuration of model parameter values corresponding to an on-road behaviour of the vehicle that is better than the starting configuration, according to the at least one set evaluation parameter;
- a module for presenting to the tyre service person service information for adjusting said condition of the wheels according to the given modified configuration.

The method according to the invention is characterized in that it comprises the following steps:
- preparing a database defining a vehicle operation model having a plurality of model parameters;
- measuring a value of at least one measurement parameter correlated with the on-road behaviour of the vehicle and measured in a static condition of the vehicle on at least one of the wheels of the vehicle;
- setting values of the model parameters according to the value measured for the measurement parameter in order to define a starting configuration of the model parameter values;
- setting at least one evaluation parameter correlated with the model parameters and representative of the on-road behaviour of the vehicle;
- simulating the on-road behaviour of the vehicle using said model, while varying the value of at least one of the model parameters correlated with a condition of the wheels adjustable by the tyre service person, in order to determine, according to the set evaluation parameter, a modified model parameter configuration corresponding to an on-road behaviour of the vehicle that is better than the starting configuration;
- presenting to the tyre service person service information for adjusting said condition of the wheels according to the given modified configuration.

Thus, the wheel service apparatus according to this invention uses the measurements taken by the known wheel service equipment (measurements preferably performed on all the wheels), measurements taken by the vehicle's diagnostic systems, or information retrieved from databases or other sources, such as for example, information entered directly by the person (for example, the measurements might be estimations made by the tyre service person), in order to perform a simulation of the vehicle's on-road behaviour and provide the tyre service person with precise information as to what operations must be carried out during static adjustment of the vehicle to obtain the on-road behaviour that is the optimum for the vehicle or at least better than the behaviour of the vehicle before adjustment. Another advantage of the invention is that the tyre service person can show the customer the effects of a given vehicle configuration (assuming a given adjustment) on the on-road behaviour of the vehicle without having to actually perform the adjustment.

For example, with the aid of a graphic interface and, if necessary, animations, too, it is possible to display a moving vehicle subjected to default actions (or actions selectable during adjustment of the apparatus), such as, for example, a sudden stop, a swerve on a wet road surface or a curve taken at high speed.

The possibility of seeing the consequences of a vehicle configuration and the effects of a possible adjustment arouses awareness which prompts the end customer (the vehicle owner) to have the vehicle corrected in order to guarantee his or her own safety and that of others.

In any case, it should be noted that the apparatus according to the invention is adapted to automatically perform the simulations necessary to identify the optimum adjustment based on the reset criteria, to be displayed as an aid to the tyre service person's work.

In light of this, it should be noted that another advantage of the invention derives from being able to determine the configuration of the wheels and of the vehicle in order to optimize the performance linked to a specific type of road or driving style.

For example, it is possible to optimize riding comfort, road hold, fuel consumption, tyre wear and other evaluation parameters.

It should be noted that the invention makes it possible to simulate the real behaviour of the vehicle to be adjusted, thanks to the fact that the parameters of the model used for the simulation are set according to the parameters measured directly on the vehicle.

In light of this, it should be noted that another advantage of this invention is that of being able to simulate the road behaviour of the vehicle using particularly detailed information about the vehicle.

Where possible, the data necessary to set the parameters of the model (used for the simulation) are measured directly on the vehicle using specific equipment; alternatively, data from one or more databases containing information relating to the type of vehicle to be adjusted can be used; the data includes, for example, the nominal weight of the vehicle, information about the brake system, suspension, drive, type of rims fitted on the wheels, type of tyres, type of road surface or track the vehicle typically travels on.

The invention therefore provides the tyre service person with a tool that makes it possible to use the measurements on the wheel and vehicle and to process the data measured by one or more instruments (within the range of known measuring instruments available to a tyre service person) to provide information exactly as to how to operate on the chassis frame and wheels to best adjust the vehicle in accordance with the customer's requirements and the limitations posed by the actual conditions of the vehicle being adjusted.

It should be noted that not all the measuring instruments potentially available need be at the same physical location and thus connected in a local network: they may be connected remotely, for example through the Internet.

These instruments may be dedicated to wheel service (tyre changers, balancing machines, wheel attitude, i.e. alignment) or they may be instruments for measuring vehicle parameters (for example, brake testers and suspension testers). Each instrument provides wheel or vehicle measurement data.

Where some measurements are not available, reference data from a database may be used.

Once all the data has been collected, whether measured or from the database, the road behaviour parameters to be optimized can be selected. For example, it is possible to choose to optimize riding comfort or braking distance.

It is also possible to select one or more vehicle behaviour simulation conditions. For example, it is possible to select a sudden stop, a curve taken at high speed or a swerve.

When all this information has been collected, the processing module performs a simulation of the vehicle's road behaviour and shows it to the user through the presentation module in the form of one or more animations.

These and other features of the invention will become more apparent from the following detailed description of a preferred, embodiment of it, with reference to the accompanying drawings, in which:

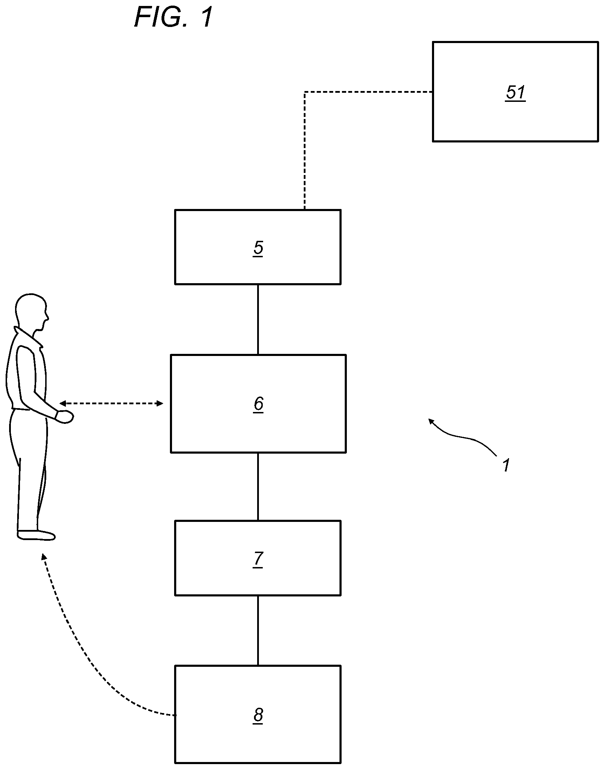

- Figure 1 is a functional diagram of the apparatus according to the invention;
- Figure 2 illustrates a vehicle in a plan view, and the position of the wheels the apparatus of Figure 1 is applicable to;
- Figure 3 illustrates an example of a perspective display of a simulation performed by the apparatus of Figure 1;
- Figure 4 illustrates an example of a two-dimensional display, from above, of a simulation performed by the apparatus of Figure 1;
- Figure 5 illustrates an example of another type of display of a simulation performed by the apparatus of Figure 1.

In the drawings, the numeral 1 denotes an apparatus for supplying a person (in particular a tyre service person) with information for statically adjusting a motor vehicle 2 equipped with wheels 3 fitted with tyres 4.

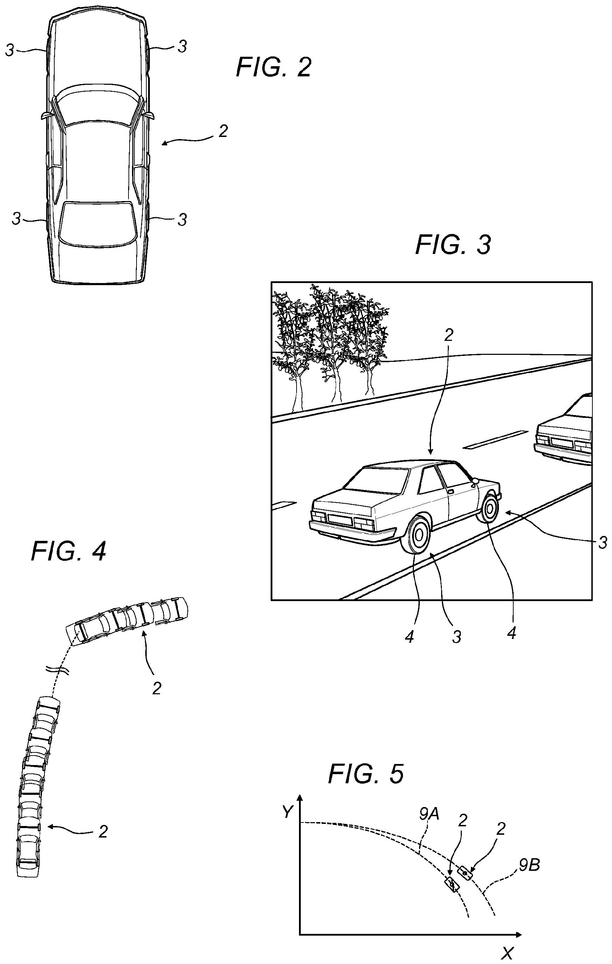

Note that in Figures 3-5, the numerals 2, 3 and 4 denote graphical representations of the vehicle, wheel and tyre, respectively.

According to the invention, the apparatus 1 comprises, in combination, a data storage module 5, a control module 6, a processing module 7 and a presentation module 8.

The data storage module 5 has access to a database defining a vehicle operation model having a plurality of model parameters.

Preferably, the data storage module 5 has a memory containing the database that defines the vehicle operation model.

Preferably, the data storage module 5 has a further memory (that is to say, it comprises two distinct memories or one memory divided into two distinct portions) designed to contain the results of the measurements taken by measuring instruments (known in the car service trade). These measuring instruments may be physically present in the car service shop and connected through a local data exchange network, or they may be located in service shops distant from each other and connected through a wide area network such as, for example, through the Internet.

Preferably, therefore, the data storage module 5 is also connected (or connectable) through the Internet to a remote server 51 having access to a database.

The fact that the measured data for the measurement parameters are stored in the memory advantageously enables the tyre service person to archive the results of the measurements performed on a vehicle for subsequent retrieval and evaluations (through simulations) at any later stage.

This also facilitates the task of collecting all the data measured by different instruments.

The control module 6 is adapted to:
- receive a value of at least one measurement parameter correlated with the on-road behaviour of the vehicle and measured on at least one of the wheels 3 of the vehicle 2;
- set values of the model parameters according to the value measured for the measurement parameter in order to define a starting configuration of the model parameter values;
- set at least one evaluation parameter (defining an evaluation criterion) correlated with the on-road behaviour of the vehicle 2.

As regards the evaluation parameter, the invention contemplates the setting, for example, of one or more of the following parameters: riding comfort, road hold, fuel consumption, tyre wear (this list is provided by way of an example only and is not exhaustive).

Preferably, the control module comprises an interface (for example, a display unit or any other customary interface device, not illustrated in the drawings) and a keyboard or other means for presenting to, and receiving instructions from, the person (that is, the user of the apparatus 1). Further, according to the invention, the control module 6, or preferably the data storage module 5, is directly connected to measuring instruments (well known in the trade and not illustrated in the drawings) such as, for example, balancing machines, attitude measuring systems or tyre changers, for receiving the measured data directly from the above mentioned instruments (or from other instruments that might be used in tyre service shops to perform measurements on the wheels 3) and constituting the above mentioned measurement parameter values).

It should be noted that the control module 6 is adapted to receive values of any number of measurement parameters.

Preferably, the measurement parameters supplied to the control module 6 include at least one of the parameters from the following list: wheel drift, runout, radial force, static and/or dynamic residual imbalance, wheel rolling resistance, maximum braking forces, braking force imbalances, tyre grip, weight distribution on the four wheels, minimum grip during suspension resonance, minimum weight, coefficients of elasticity of suspension and tyre, damping factors of shock absorbers and tyres, vehicle drift on front axle, vehicle drift on rear axle, delay time between application of pressure on brake pedal and braking force, load transfer between rear axle and front axle during braking, toe and camber angles, steering geometry and Ackermann angle, chassis frame height, curve of torque transmitted to wheels, vehicle coast down at roller power test bench and on the road with accelerometer, graph of gas and/or particulate emissions upon variation of power output and speed, sound emissions as a function of rpm and engine power output.

More preferably, the at least one measurement parameter supplied to the control module 6 is included in the following list: wheel 3 placement, tyre 4 placement on the rims, matching of the single tyres 4 on the respective rims, wheel 3 attitude, wheel 3 conicity, and adjustment of brakes, shock absorbers and suspension springs. More preferably still, the at least one measurement parameter supplied to the control module 6 is included in the following list: wheel 3 placement, tyre 4 placement on the rims, matching of the single tyres 4 on the respective rims, wheel 3 attitude.

The processing module 7 is adapted to perform one or more simulations of the on-road behaviour of the vehicle 2 using the above mentioned model.

More specifically, the processing module 7 is programmed to vary the value of at least one of the model parameters (compared to the value of that parameter in the starting configuration) in order to determine, according to the at least one set evaluation parameter, a modified configuration of model parameter values corresponding to an on-road behaviour of the vehicle that is better than the starting configuration.

It should be noted that, preferably, the control module 6 is adapted to display to the person a list of evaluation parameters and to set said evaluation parameter according to the selection made by the person.

In light of this, it should also be noted that two or more evaluation parameters (that is, criteria) are set simultaneously.

In that case, the processing module 7 is programmed to determine the modified configuration (of model parameter values) corresponding to an on-road behaviour of the vehicle that is better than the starting configuration, according to an optimization criterion, by evaluating the set evaluation parameters in combination.

The presentation module 8 is adapted to make available to the person (as output from the apparatus 1) service information for adjusting the vehicle 2 according to the given modified configuration of model parameter values.

The information regards operations that can be performed by the person (that is, the tyre service person) during a subsequent stage of adjusting the vehicle 2.

For example, according to the invention, said information regards the operations described below. As regards the operations that the tyre service person can perform on the wheel, possible information provided by the presentation module 8 (based on processes performed by the processing module 7) regards the following:
- removing the tyre 4 from the rim 3 and mounting it to face the opposite direction (the inside face of the tyre 4 is directed towards the outside and vice versa);
- turning the tyre 4 relative to the rim 3 by an amount calculated by the wheel service machine ("matching");
- correcting the conicity of the tyre 4 (this operation is done using machines known as "buffers" and only when strictly necessary because it involves reducing the depth of the tread on the tyre 4);
- mounting the wheels 3 at given positions on the vehicle 2.

As regards the operations that the tyre service person can perform on the vehicle 2, possible information provided by the presentation module 8 (based on processes performed by the processing module 7) regards the following:
- mechanically adjusting the wheel 3 movement means in such a way as to modify the characteristic angles of the vehicle attitude;
- substituting or adjusting the suspension;
- substituting or adjusting the brakes;
- reprogramming the electronic control units that control braking, stability and attitude directly on the vehicle (for example, ESP, ABS, ASR, EBD, active suspension).

According to the invention, the processing module 7 is programmed to perform a plurality of simulations in order to determine the modified configuration of model parameter values by successive iterations. Thus, the processing module 7 is programmed to set as constant a first part of the model parameters (constant at the set values defining the starting configuration) and as variable a second part of the model parameters.

According to the invention, the processing module 7 varies the model parameters set as variables automatically from one simulation to another or, if necessary, within a single simulation.

Also according to the invention, the person might intervene between one simulation and another (or, if necessary, within a single simulation) to manually apply a variation to one or more of the parameters set as variables.

That way, the person (that is, the tyre service person) can set a model parameter configuration at his own discretion (by acting at least on a part of said parameters), using the interface of the control module 6, to then activate the processing module 7 in order to check the actual on-road behaviour that the vehicle to be adjusted would adopt if he made the adjustment corresponding to the variation set for the model parameter configuration.

Preferably, the processing module 7 is programmed with mathematical optimization algorithms, of *per* se known type, for identifying optimized values of the model parameters set as variables in as short a time as possible (for example by minimizing the number of simulations to be performed), when the processing module 7 operates automatically.

It should be noted that, preferably, the data storage module 5 comprises (or at least has access to) a database relating to a plurality of predetermined conditions of vehicle use.

That way, once the measurement data and the data from the database have been collected, it is possible to set or select one or more conditions for simulating vehicle behaviour. For example, it is possible to select a sudden stop, a curve taken at high speed or a swerve.

It should be noted that, also according to the invention, these simulation conditions are checked automatically by the processing module 7 during the simulation in order to assign to the evaluation parameter values that are particularly reliable and representative of the real on-road behaviour of the vehicle under different conditions of use.

Figure 5 illustrates by way of an example a display representing a result of a simulation of the vehicle taking a curve; the numeral 9 in Figure 5 denotes the trajectory of the vehicle 2. More specifically, the label 9A denotes the trajectory that the vehicle would adopt if the person made the adjustments suggested by the apparatus (that is to say, the trajectory of the vehicle with the model parameters modified by the processing module), and 9b the trajectory of the vehicle without the intervention of the tyre service person (that is, the trajectory that the vehicle would adopt with the model parameters in their starting configuration).

According to another aspect of the invention, the control module 6 is adapted to display to the person a list containing at least one subset of the model parameters and to receive at least one of said parameters selected by the person from the list.

In light of this, the processing module 7 is programmed to modify (that is, to set as variables for the simulation) or, alternatively, to keep unchanged (that is, to set as constants for the simulation) the model parameters selected by the person during the simulations.

This advantageously enables the tyre service person to take into account the actual requirements of the customer (that is, of the vehicle owner) and any constraints or limitations on possible adjustments that can be carried out on the vehicle due to the actual conditions of the vehicle 2.

For example, the customer might not be willing to modify vehicle attitude or to substitute the tyres even if this type of adjustment were necessary to achieve an optimum vehicle configuration according to the evaluation criterion (that is according to the parameter) indicated.

Or the type or wear condition of the tyres might be such as not to enable buffing of the tyres to be carried out.

Thus, the person (that is, the user of the apparatus 1, that is, the tyre service person) can tell the apparatus which parameters (correlated with the operation of the vehicle) he is actually willing to act on to perform the adjustment and those which he is not willing to act on; thus, the apparatus is advantageously adapted to provide information on the adjustments to be performed (in optimized manner) taking into account the input provided by the person.

In this connection, it is important to note that, generally speaking, the model parameters interact with each other to determine the on-road behaviour of the vehicle 2.

Thus, by way of an example, the apparatus might suggest changing the position of the front wheels and modifying the attitude of these wheels according to certain characteristic angles in order to improve road holding performance.

If exchanging the wheels were not possible, however, for example because unidirectional tyres 4 are being used and he does not want to exchange the tyres 4 on the two wheels 3, the optimum configuration (suggested by the apparatus taking into account the impossibility of that adjustment) might involve an attitude with different characteristic angles.

In light of this, the processing module 7 is preferably adapted to vary the value of at least one of the model parameters included in the following list: wheel 3 placement, tyre 4 placement on the rims, matching of single tyres 4 on the respective rims, wheel 3 attitude, wheel 3 conicity, and adjustment of brakes, shock absorbers and suspension springs.

Preferably, the processing module 7 is programmed to calculate values of the evaluation parameters (of those set by the control module 6 or of other evaluation parameters used internally by the processing module 7); these parameters are calculated following the simulations (that is, according to the results of the simulations), in order to evaluate whether the vehicle behaviour matches the criterion determined by the evaluation parameter).

Moreover, it should be noted that the control module 6 is adapted to receive from the person data useful for identifying the type of vehicle and for setting values of one or more model parameters according to the type of vehicle set, in order to define the above mentioned starting configuration of the model parameter values.

It should also be noted that the presentation module 8 is adapted to make available to the person the at least one simulation performed by the processing module 7.

The model parameters are directly or indirectly correlated with a plurality of input parameters which the apparatus 1 can receive as measurement parameters (in that case, the apparatus 1 receives a value measured directly on the vehicle 2 to be adjusted or on a wheel 3) or can load a value from a database, possibly according to the type of vehicle selected (in that case, the apparatus 1 receives pre-set values, preferably contained in the data storage module 5).

Below is a list (provided by way of example and not necessarily exhaustive) of the input parameters which the apparatus 1 is adapted to receive.

The following are input parameters (in particular measurement parameters) which can be measured from a tyre changing machine: rim profile, tyre profile, coefficient of elasticity of wheel, radial forces. The following are input parameters (in particular measurement parameters) which can be measured from a balancing machine: rim profile, tyre profile, residual imbalances, coefficient of elasticity of wheel, lateral forces.

The following are input parameters (in particular measurement parameters) which can be measured from an attitude measuring device: toe, camber, caster, maximum steering angle, wheelbase, track, chassis frame height.

The following are input parameters (in particular measurement parameters) which can be measured from a suspension test bench: elasticity, damping coefficient.

The following are input parameters (in particular measurement parameters) which can be measured from a brake test bench: brake system efficiency, sliding friction coefficient, rolling friction coefficient.

The following are input parameters that can be retrieved from a database (in particular a database dedicated to the user of the apparatus): vehicle type, suspension type, rim type, tyre type, type of roads travelled, results of previous simulations. The following are input parameters that can be retrieved from a database (in particular a database dedicated to vehicle specifications): vehicle dimensions, nominal toe, camber and caster, nominal maximum steering angle, nominal wheelbase, nominal track, nominal chassis frame height, vehicle weight, weight distribution on the wheels, engine power, engine torque, presence of safety devices (including stability controls ESP, ESC or VDC), antilock braking system (ABS), traction control (ASR or CTS), electronic brake divider (EBD), presence of active suspension) drive (front, rear, 4-wheel) .

The following are input parameters that can be retrieved from a database (in particular a database dedicated to suspension): dimensions, elasticity, damping coefficient.

The following are input parameters that can be retrieved from a database (in particular a database dedicated to rim specifications): weight, radius, width, material.

The following are input parameters that can be retrieved from a database (in particular a database dedicated to tyre specifications): weight, internal radius, external radius, width, tread profile, sliding friction coefficient, rolling friction coefficient, coefficient of elasticity.

It should be noted that, according to the invention, the model contained in the data storage module 5 may comprise (as model parameters) any combination of the parameters listed above; more preferably, said model comprises (as model parameters) all the parameters listed above or parameters equivalent or corresponding to them. Below is a description of how the apparatus 1 works.
a) The values of one or more of the measurement parameters are measured and the corresponding data are captured (for example, using measuring instruments customarily used by tyre service persons, as described above).
   These data are received by the control module 6 (as described above).
b) The person selects one or more optimization parameters (if the person does not make a selection, the control module 6 sets a default optimization parameter).
c) Optionally, the person selects a type of road (as described above) in order to identify a predetermined condition of vehicle use.
d) The person (using the control module 6) selects the type of vehicle to be adjusted.
e) The control module 6 sets a plurality of model parameters, using data from the data storage module 5, according to the selected vehicle type. If the person does not make a selection, the control module 6 sets the plurality of model parameters in default mode using data from the data storage module 5.
f) Preferably, said setting step involves retrieving data from one or more of the databases described above; more preferably, said setting step involves retrieving data from all the databases described above.
g) Optionally, the person, using the control module 6, selects one or more parameters (model parameters or parameters corresponding thereto) which he wants to set as variables or, alternatively, as constants in the simulations to follow.
h) The processing module 7 processes the data set by the control module 6 (and defining a starting configuration of the model parameters).
i) The processing module 7 performs a simulation of the on-road behaviour of the vehicle according to the set conditions (as described above).
l) The presentation module 8 displays the simulation, that is to say, makes it available to the person.
m) The processing module 7 modifies the value of at least one model parameter (set as variable) and performs a simulation with the model parameter configuration thus modified.
   It should be noted that if the processing module 7 were programmed to perform a single simulation as a whole, the modification of at least one model parameter (set as variable) would occur before the simulation, on the basis of a preset criterion, according to the set evaluation parameter.
n) The processing means 7 derive a value for the evaluation parameter (or for a quantity correlated with it) and perform a check (based on a reset criterion, for example a threshold value settable by the person) as to whether or not the evaluation parameter value derived on the basis of the simulation performed with the modified model parameter configuration satisfies a predetermined condition; according to the result of this check, the processing means 7 proceed to another simulation.
   In that case, the processing means 7 iterate steps m and n in sequence as many times as necessary to satisfy the predetermined condition on the set evaluation parameter, or combination of evaluation parameters.
o) The presentation means 8 make available to the person information on the operations to be performed on (that is, on the adjustments to be applied to) the vehicle 2, according to the last model parameter configuration set by the processing module 7 at the end of the simulation cycle described above.

It should be noted that the invention also contemplates presenting to the person, through the presentation module 8, information on the operations to be performed on (that is, on the adjustments to be applied to) the vehicle 2, according to the model parameter configuration set by the processing module 7 after each iteration of the simulation cycle described above.

It should be noted that the operations described above need not necessarily be performed in the order indicated (with the exception of the operations described in steps m, n and o).

Thus, this invention also provides a method for supplying a person with information for statically adjusting a motor vehicle 2 equipped with wheels 3 fitted with tyres 4.

The method according to the invention comprises the following steps:
- preparing a database defining a vehicle operation model having a plurality of model parameters;
- measuring a value of at least one measurement parameter correlated with the on-road behaviour of the vehicle and measured on at least one of the wheels of the vehicle 2;

- setting values of the model parameters according to the value measured for the measurement parameter in order to define a starting configuration of the model parameter values;
- setting at least one evaluation parameter correlated with the vehicle's on-road behaviour;
- simulating the on-road behaviour of the vehicle using said model, while varying the value of at least one of the model parameters in order to determine, according to the set evaluation parameter, a modified model parameter configuration corresponding to an on-road behaviour of the vehicle that is better than the starting configuration;
- presenting to the person service information for adjusting the vehicle according to the given modified configuration of the model parameter values.

Preferably, the simulation step is repeated for a plurality of times, varying the value of the at least one model parameter from one time to the other, in order to determine the modified configuration of model parameter values by successive iterations.

Preferably, for each of the simulations performed, a corresponding value is calculated for the set evaluation parameter.

Preferably, the setting of the at least one evaluation parameter occurs in response to a selection the person makes from a list of predetermined evaluation parameters.

Preferably, the method comprises a step, preceding the simulation step, of presenting to the person a list containing at least one subset of the model parameters, to enable the person to select at least one of the parameters from the list, and to set it as variable or, alternatively, keep it constant in the simulation step to follow.

It should be noted that the model parameters set as variables in the simulation may coincide (or be correlated) with the measurement parameters, but they may be entyrely or partially different from said measurement parameters.

Preferably, the method comprises a step, preceding the simulation step, of presenting to the person information useful for identifying the type of vehicle in order to set values of one or more of the model parameters according to the type of vehicle identified.

Preferably, the method comprises a step of presenting to the person a visual representation of the at least one simulation.

Preferably, the at least one measurement parameter is measured on all the wheels 3 of the vehicle (or at least on a pair of corresponding wheels). Preferably, the measuring step comprises at least one of the following steps:
- capturing the profile of one of the wheels 3 from a tyre changing machine;
- capturing the profile of one of the wheels 3 from a balancing machine;
- capturing the imbalances of one of the wheels 3 from a balancing machine;
- capturing the forces applied by the wheel 3 when it is turning and is locally subjected to a compressional force;
- capturing the characteristic parameters of the attitude of the wheels 3 of the vehicle 2.

Preferably, the at least one measuring step is performed in such a way as to measure at least one measurement parameter from those in the following list: wheel drift, wheel runout, radial force, residual imbalance.

Preferably, the at least one simulation comprises varying the value of at least model parameter from those in the following list: placement of wheels on the vehicle, tyre placement on the rims, matching of tyres on the respective rims, wheel attitude, wheel conicity, and adjustment of brakes, shock absorbers and suspension springs.

Preferably, the method also comprises a step of storing the data relating to the measured measurement parameters in a memory of the data storage module 5 (said memory being an additional memory, or a memory divided into two distinct portions, designed to contain the results of the measurements taken using measuring instruments, as described above).

The invention has the following advantages.

It provides the tyre service person with a reliable and dependable tool that helps him to choose the adjustments to be performed on a vehicle according to the vehicle's real conditions.

The tool is also particularly convenient for the customer (that is, the owner of the vehicle) and is also highly dependable and precise since it allows the effect of the suggested adjustment on the vehicle's on-road behaviour to be checked without having to actually test the vehicle itself on the road.

Moreover, the invention provides the tyre service person with a tool which is easy to use (because it does not require the person to understand the mechanisms that control the model, since it is not a tool for designing the vehicle or a part of it) and which makes it possible (while still providing optimal information based on the setting data received) to take into account all the customer's real requirements, and all the constraints and limitations on specific vehicle adjustments which the tyre service person has to deal with in practical terms.

## Claims

1. An apparatus (1) for supplying a tyre service person with information for statically adjusting wheels (3) or tyres (4) of a motor vehicle (2), comprising:
- a data storage module (5) with access to a database defining a model for the functioning of a vehicle (2), having a plurality of model parameters, whereby a trajectory of the vehicle can be calculated through said model;
- a control module (6) adapted to
receive values of a plurality of measurement parameters correlated with an on-road behaviour of the vehicle (2) with its trajectory, wherein at least one of said measurement parameters is measured in a static condition of the vehicle (2),
set values of the model parameters according to the value measured for the measurement parameter in order to define a starting configuration of the model parameter values, and
set at least one evaluation parameter correlated with the model parameters and representative of the vehicle's on-road behaviour with its trajectory, an evaluation criterion being defined for said evaluation parameter;
- a processing module (7) adapted to perform a plurality of simulations of the on-road behaviour of the vehicle (2) and its trajectory using said model, in order to determine a modified configuration of model parameter values,
the processing module (7) being programmed to set a first part of the model parameters as constant at the values of the starting configuration and a second part of the model parameters as variable, the processing module (7) being programmed for automatically varying the value of model parameters set as variables, wherein said model parameters set as variables comprise at least one of the model parameters correlated with a condition of the wheels (3) which is adjustable by the tyre service person,
the processing module (7) being programmed to perform a simulation of the on-road behaviour of the vehicle (2) according to the starting configuration and a simulation according to a modified configuration, wherein the apparatus derives a first trajectory of the vehicle with the model parameters in their starting configuration and a second trajectory of the vehicle with the model parameters modified by the processing module, the processing module (7) being programmed to perform a plurality of simulations in order to determine the modified configuration of model parameter values by successive iterations,
the processing module (7) being programmed to calculate, at each iteration and corresponding simulation, a corresponding value for the evaluation parameter, according to the result of the respective simulation, to evaluate whether the vehicle behaviour matches the criterion determined by the evaluation parameter, in order to determine a modified configuration of model parameter values corresponding to an on-road behaviour of the vehicle (2) with its trajectory, that is better than the on-road behaviour of the vehicle with its trajectory, corresponding to the starting configuration, according to said at least one evaluation parameter;
- a module (8) for presenting to the tyre service person service information for adjusting said condition of the wheels (3) according to the given modified configuration.

2. The apparatus according to claim 1, wherein the processing module (7) is programmed to perform a plurality of simulations in order to determine the modified configuration of model parameter values by successive iterations.

3. The apparatus according to claim 1 or 2, wherein the control module (6) is adapted to display to the person a list of evaluation parameters and to set said evaluation parameter according to a selection made by the person.

4. The apparatus according to any of the foregoing claims, wherein the control module (6) is adapted to display to the person a list containing at least one subset of the model parameters and to receive at least one of said parameters selected by the person from the list and wherein the processing module is programmed to modify or, alternatively, to keep unchanged the model parameters selected by the person during the simulations.

5. The apparatus according to any of the foregoing claims, wherein the control module (6) is adapted to receive from the person data useful for identifying the type of vehicle and for setting values of one or more model parameters according to the type of vehicle (2) set, in order to define the starting configuration of the model parameter values.

6. The apparatus according to any of the foregoing claims, wherein the presentation module (8) is adapted to make available to the person the at least one simulation performed by the processing module (7).

7. The apparatus according to any of the foregoing claims, wherein the processing module (7) is adapted to vary the value of at least one of the model parameters included in the following list: wheel (3) placement, tyre (4) placement on the rims, matching of single tyres (4) on the respective rims, wheel (3) attitude, wheel (3) conicity, and adjustment of brakes, shock absorbers and suspension springs.

8. The apparatus according to any of the foregoing claims, wherein the at least one measurement parameter is included in the following list: wheel drift, wheel runout, radial force, residual imbalance.

9. The apparatus according to any of the foregoing claims, wherein said information provided based on said calculating step comprises items selected from the following list:
- removing a tyre (4) from the rim (3) and mounting it to face the opposite direction;
- turning the tyre (4) relative to the rim (3) by an amount to be calculated by a wheel service machine;
- correcting the conicity of the tyre (4);
- mounting the wheels (3) at given positions on the vehicle (2);
- mechanically adjusting the wheel 3 movement means in such a way as to modify the characteristic angles of the vehicle attitude;
- substituting or adjusting the suspension;
- substituting or adjusting the brakes;
- reprogramming the electronic control units that control braking, stability and attitude directly on the vehicle.

10. A method for supplying a tyre service person with information for statically adjusting wheels (3), or tyres (4), of a motor vehicle (2), comprising the following steps:
- preparing a database defining a model for the functioning of the vehicle (2), the model having a plurality of model parameters, whereby a trajectory of the vehicle can be calculated through said model;
- measuring a value of plurality of measurement parameters correlated with the on-road behaviour of the vehicle (2) with its trajectory, wherein at least one of said measurement parameters is measured in a static condition of the vehicle (2),
- setting values of the model parameters according to the value measured for the measurement parameter in order to define a starting configuration of the model parameter values, wherein a first part of the model parameters is set as constant at the values of the starting configuration and a second part of the model parameters is set as variable,
- setting at least one evaluation parameter correlated with the model parameters and representative of the on-road behaviour of the vehicle (2) with its trajectory, an evaluation criterion being defined for said evaluation parameter;
- performing a plurality of simulations the on-road behaviour of the vehicle (2) including its trajectory, using said model, by varying the value of model parameters set as variables in order to determine the modified configuration of model parameter values, said model parameters set as variables comprising the value of at least one of the model parameters correlated with a condition of the wheels (3) adjustable by the tyre service person, wherein a simulation of the on-road behaviour of the vehicle (2) is performed according to the starting configuration and another simulation is performed according to a modified configuration, wherein the apparatus derives a first trajectory of the vehicle with the model parameters in their starting configuration and a second trajectory of the vehicle with the model parameters modified by the processing module, the processing module (7) being programmed to perform a plurality of simulations in order to determine the modified configuration of model parameter values by successive iterations,
- calculating, at each iteration and corresponding simulation, a corresponding value of the evaluation parameter, according to the result of the respective simulation, to evaluate whether the vehicle behaviour matches the criterion determined by the evaluation parameter, in order to determine a modified model parameter configuration corresponding to an on-road behaviour of the vehicle, with its trajectory, that is better, than the on-road behaviour of the vehicle with its trajectory, corresponding to the starting configuration, according to said at least one evaluation parameter;
- presenting to the tyre service person service information for adjusting said condition of the wheels (3) according to the given modified configuration.

11. The method according to claim 10, wherein the simulation step is repeated for a plurality of times, varying the value of the at least one model parameter from one time to the other, in order to determine the modified configuration of model parameter values by successive iterations.

12. The method according to any of the claims from 10 to 11, wherein the setting of the at least one evaluation parameter occurs in response to a selection the person makes from a list of predetermined evaluation parameters.

13. The method according to any of the claims from 10 to 12, comprising a step, preceding the simulation step, of presenting to the person a list containing at least one subset of the model parameters, to enable the person to select at least one of the parameters from the list, and to set it as variable or, alternatively, keep it constant in the simulation step to follow.

14. The method according to any of the claims from 10 to 13, comprising a step, preceding the simulation step, of presenting to the person information useful for identifying the type of vehicle in order to set values of one or more of the model parameters according to the type of vehicle identified.

15. The method according to any of the claims from 10 to 14, comprising a step of presenting to the person a visual representation of the at least one simulation.

16. The method according to any of the claims from 10 to 15, wherein the at least one measurement parameter is measured on all the wheels of the vehicle (2).

17. The method according to any of the claims from 10 to 16, wherein the measuring step comprises at least one of the following steps:
- capturing the profile of one of the wheels (3) from a tyre changing machine;
- capturing the profile of one of the wheels (3) from a balancing machine;
- capturing the imbalances of one of the wheels (3) from a balancing machine;
- capturing the forces applied by the wheel (3) when it is turning and is locally subjected to a compressional force;
- capturing the characteristic parameters of the attitude of the wheels (3) of the vehicle (2).
in order to measure at least one measurement parameter from those in the following list: wheel drift, wheel runout, radial force, residual imbalance.

18. The method according to any of the claims from 10 to 17, wherein the at least one simulation comprises varying the value of at least model parameter from those in the following list: wheel (3) placement, tyre (4) placement on the rims, matching of single tyres (4) on the respective rims, wheel (3) attitude, wheel (3) conicity, and adjustment of brakes, shock absorbers and suspension springs.

19. The method according to any of the foregoing claims from 10 to 18, comprising a step of storing the values measured for the at least one measurement parameter.

20. The method according to any of the foregoing claims from 10 to 19, wherein said information provided based on said calculating step comprises items selected from the following list:
- removing a tyre (4) from the rim (3) and mounting it to face the opposite direction;
- turning the tyre (4) relative to the rim (3) by an amount to be calculated by a wheel service machine;
- correcting the conicity of the tyre (4);
- mounting the wheels (3) at given positions on the vehicle (2);
- mechanically adjusting the wheel 3 movement means in such a way as to modify the characteristic angles of the vehicle attitude;
- substituting or adjusting the suspension;
- substituting or adjusting the brakes;
- reprogramming the electronic control units that control braking, stability and attitude directly on the vehicle.

## Patentansprüche

1. Vorrichtung (1) zur Versorgung einer Reifenserviceperson mit Informationen zur statistischen Einstellung von Rädern (3) oder Reifen (4) eines Motorfahrzeugs (2), umfassend:
- ein Datenspeicherungsmodul (5) mit Zugang zu einer Datenbank, definierend ein Modell für den Betrieb eines Fahrzeugs (2), aufweisend eine Vielzahl von Modellparametern, wodurch eine Bahn des Fahrzeugs mittels des Modells berechnet werden kann;
- ein Steuermodul (6), das ausgelegt ist, um Werte einer Vielzahl an Messparametern zu empfangen, die mit einem Straßenverhalten des Fahrzeugs (2) mit dessen Bahn korreliert sind, wobei mindestens einer der Messparameter in einem statischen Zustand des Fahrzeugs (2) gemessen wird;
um Werte des Modellparameters nach dem für den Messparameter gemessenen Wert festzulegen, um eine Startkonfiguration der Modellparameterwerte zu definieren, und um
mindestens einen Bewertungsparameter festzulegen, der mit den Modellparametern korreliert und repräsentativ für das Straßenverhalten des Fahrzeugs mit seiner Bahn ist, wobei ein Bewertungskriterium für den Bewertungsparameter definiert wird;
- ein Verarbeitungsmodul (7), das ausgelegt ist, um eine Vielzahl an Simulationen des Straßenverhaltens des Fahrzeugs (2) und dessen Bahn unter Nutzung des Modells durchzuführen, um eine modifizierte Konfiguration der Modellparameterwerte zu ermitteln,
- wobei das Verarbeitungsmodul (7) programmiert ist, um einen ersten Teil der Modellparameter als Konstante bei den Werten der Startkonfiguration und einen zweiten Teil der Modellparameter als Variable festzulegen, wobei das Verarbeitungsmodul (7) programmiert ist, um den Wert der als Variablen festgelegten Modellparameter automatisch zu variieren, wobei die als Variablen festgelegten Modellparameter mindestens eins der Modellparameter umfassen, korreliert mit einem Zustand der Räder (3), der von der Reifenserviceperson eingestellt werden kann,
wobei das Verarbeitungsmodul (7) programmiert ist, um eine Simulation des Straßenverhaltens des Fahrzeugs (2) nach der Startkonfiguration und eine Simulation nach einer modifizierten Konfiguration durchzuführen, wobei die Vorrichtung eine erste Bahn des Fahrzeugs mit den Modellparametern in deren Startkonfiguration und eine zweite Bahn des Fahrzeugs mit den durch das Verarbeitungsmodul modifizierten Modellparametern ableitet, wobei das Verarbeitungsmodul (7) programmiert ist, um eine Vielzahl an Simulationen durchzuführen, um die modifizierte Konfiguration der Modellparameterwerte durch nachfolgende Wiederholungen zu ermitteln,
wobei das Verarbeitungsmodul (7) programmiert ist, um bei jeder Wiederholung und entsprechenden Simulation einen entsprechenden Wert für den Bewertungsparameter nach dem Ergebnis der jeweiligen Simulation zu berechnen, um zu bewerten, ob das Fahrzeugverhalten dem durch den Bewertungsparameter ermittelten Kriterium entspricht, um eine modifizierte Konfiguration von Modellparameterwerten zu ermitteln, die einem Straßenverhalten des Fahrzeugs (2) mit dessen Bahn entsprechen, das besser ist als das Straßenverhalten des Fahrzeugs mit dessen Bahn, entsprechend der Startkonfiguration gemäß dem mindestens einen Bewertungsparameter;
- ein Modul (8), um der Reifenserviceperson Service-Informationen bereitzustellen, um den Zustand der Räder (3) nach der vorgegebenen modifizierten Konfiguration einzustellen.

2. Vorrichtung nach Anspruch 1, wobei das Verarbeitungsmodul (7) programmiert ist, um eine Vielzahl an Simulationen durchzuführen, um die modifizierte Konfiguration der Modellparameterwerte durch nachfolgende Wiederholungen zu ermitteln.

3. Vorrichtung nach Anspruch 1 oder 2, wobei das Steuermodul (6) ausgelegt ist, um der Person eine Liste von Bewertungsparametern anzuzeigen und um den Bewertungsparameter gemäß einer von der Person durchgeführten Auswahl festzulegen.

4. Vorrichtung nach einem der vorhergehenden Ansprüche, wobei das Steuermodul (6) ausgelegt ist, um der Person eine Liste anzuzeigen, die mindestens eine Unterreihe der Modellparameter enthält, und um mindestens einen der von der Person aus der Liste ausgewählten Parameter zu empfangen, wobei das Verarbeitungsmodul programmiert ist, um die von der Person während der Simulationen ausgewählten Modellparameter zu modifizieren oder alternativ aufrechtzuerhalten.

5. Vorrichtung nach einem der vorhergehenden Ansprüche, wobei das Steuermodul (6) ausgelegt ist, um von der Person Daten zu empfangen, die nützlich sind, um die Art des Fahrzeugs zu identifizieren, und um Werte von einem oder mehreren Modellparametern nach dem Typ des eingestellten Fahrzeugs (2) festzulegen, um die Startkonfiguration der Modellparameterwerte zu definieren.

6. Vorrichtung nach einem der vorhergehenden Ansprüche, wobei das Bereitstellungsmodul (8) ausgelegt ist, um der Person mindestens eine Simulation zur Verfügung zu stellen, die vom Verarbeitungsmodul (7) durchgeführt wurde.

7. Vorrichtung nach einem der vorhergehenden Ansprüche, wobei das Verarbeitungsmodul (7) ausgelegt ist, um den Wert von mindestens einem der Modellparameter zu variieren, die in der folgenden Liste enthalten sind: Positionierung des Rads (3), Positionierung des Reifens (4) an den Felgen, Passung von einzelnen Reifen (4) auf den jeweiligen Felgen, Lage des Rads (3), Konizität des Rads (3) und Einstellung von Bremsen, Stoßdämpfern und Federungen.

8. Vorrichtung nach einem der vorhergehenden Ansprüche, wobei der mindestens eine Messparameter in der folgenden Liste enthalten ist: Radabweichung, Felgenschlag, Radialkraft, Restunwucht.

9. Vorrichtung nach einem der vorhergehenden Ansprüche, wobei die Informationen, die basierend auf dem Berechnungsschritt bereitgestellt werden, Elemente umfassen, die aus der folgenden Liste ausgewählt sind:
- Abziehen eines Reifens (4) von der Felge (3) und dessen Montieren, sodass er in die andere Richtung gewandt ist;
- Drehen des Reifens (4) relativ zur Felge (3) um eine Menge, die von einer Radservicemaschine zu berechnen ist;
- Korrigieren der Konizität des Reifens (4);
- Montieren (3) der Räder an vorgegebenen Positionen am Fahrzeug (2);
- mechanisches Einstellen des Rads (3) mithilfe von Bewegungsmitteln, sodass die charakteristischen Winkel der Fahrzeuglage modifiziert werden;
- Ersetzen oder Einstellen der Federung;
- Ersetzen oder Einstellen der Bremsen;
- Neuprogrammieren der elektronischen Steuergeräte, die Bremsen, Stabilität und Lage direkt am Fahrzeug steuern.

10. Verfahren zur Versorgung einer Reifenserviceperson mit Informationen zur statistischen Einstellung von Rädern (3) oder Reifen (4) eines Motorfahrzeugs (2), umfassend die folgenden Schritte:
- Vorbereiten einer Datenbank, definierend ein Modell für den Betrieb des Fahrzeugs (2), wobei das Modell eine Vielzahl an Modellparameter aufweist, wodurch eine Bahn des Fahrzeugs mittels des Modells berechnet werden kann;
- Messen eines Werts einer Vielzahl an Messparametern, die mit dem Straßenverhalten des Fahrzeugs (2) mit dessen Bahn korreliert sind, wobei mindestens einer der Messparameter in einem statischen Zustand des Fahrzeugs (2) gemessen wird;
- Festlegen von Werten des Modellparameters nach dem für den Messparameter gemessenen Wert, um eine Startkonfiguration der Modellparameterwerte zu definieren, wobei ein erster Teil der Modellparameter als Konstante bei den Werten der Startkonfiguration und ein zweiter Teil der Modellparameter als Variable festgelegt werden;
- Festlegen von mindestens einem Bewertungsparameter, der mit den Modellparametern korreliert und repräsentativ für das Straßenverhalten des Fahrzeugs (2) mit seiner Bahn ist, wobei ein Bewertungskriterium für den Bewertungsparameter definiert wird;
- Durchführen einer Vielzahl an Simulationen des Straßenverhaltens des Fahrzeugs (2) einschließlich dessen Bahn unter Nutzung des Modells, indem der Wert von als Variablen festgelegten Modellparametern geändert wird, um die modifizierte Konfiguration von Modellparameterwerten zu ermitteln, wobei die als Variablen festgelegten Modellparameter den Wert von mindestens einem der Modellparameter umfassen, korreliert mit einem Zustand der Räder (3), der von der Reifenserviceperson eingestellt werden kann, wobei eine Simulation des Straßenverhaltens des Fahrzeugs (2) nach der Startkonfiguration und eine andere Simulation nach einer modifizierten Konfiguration durchgeführt werden, wobei die Vorrichtung eine erste Bahn des Fahrzeugs mit den Modellparametern in deren Startkonfiguration und eine zweite Bahn des Fahrzeugs mit den durch das Verarbeitungsmodul modifizierten Modellparametern ableitet, wobei das Verarbeitungsmodul (7) programmiert ist, um eine Vielzahl an Simulationen durchzuführen, um die modifizierte Konfiguration der Modellparameterwerte durch nachfolgende Wiederholungen zu ermitteln,
- bei jeder Wiederholung und entsprechenden Simulation Berechnen eines entsprechenden Werts für den Bewertungsparameter nach dem Ergebnis der jeweiligen Simulation, um zu bewerten, ob das Fahrzeugverhalten dem durch den Bewertungsparameter ermittelten Kriterium entspricht, um eine modifizierte Konfiguration von Modellparameterwerten zu ermitteln, die einem Straßenverhalten des Fahrzeugs mit dessen Bahn entsprechen, das besser als das Straßenverhalten des Fahrzeugs mit dessen Bahn ist, entsprechend der Startkonfiguration gemäß dem mindestens einen Bewertungsparameter;
- Bereitstellen von Service-Informationen für die Reifenserviceperson, um den Zustand der Räder (3) nach der vorgegebenen modifizierten Konfiguration einzustellen.

11. Verfahren nach Anspruch 10, wobei der Schritt zum Simulieren eine Vielzahl an Malen wiederholt wird, indem der Wert des mindestens einen Modellparameters jeweils variiert wird, um die modifizierte Modellparameterkonfigurationswerte durch aufeinanderfolgende Wiederholungen zu ermitteln.

12. Verfahren nach einem der Ansprüche 10 bis 11, wobei die Einstellung des mindestens einen Bewertungsparameters infolge einer Auswahl stattfindet, die die Person aus einer Liste vorgegebener Bewertungsparameter durchführt.

13. Verfahren nach einem der Ansprüche 10 bis 12, umfassend einen Schritt, der vor dem Simulationsschritt stattfindet, zum Bereitstellen einer Liste, die mindestens eine Unterreihe der Modellparameter enthält, für eine Person, um der Person zu ermöglichen, mindestens einen der Parameter aus der Liste zu wählen und diesen als Variable festzulegen oder alternativ im nachfolgenden Simulationsschritt konstant aufrechtzuerhalten.

14. Verfahren nach einem der Ansprüche 10 bis 13, umfassend einen Schritt, der vor dem Simulationsschritt stattfindet, zum Bereitstellen von Informationen für eine Person, die nützlich sind, um den Fahrzeugtyp zu identifizieren, um Werte von einem oder mehreren der Modellparameter nach dem identifizierten Fahrzeugtyp festzulegen.

15. Verfahren nach einem der Ansprüche 10 bis 14, umfassend einen Schritt zum Bereitstellen einer visuellen Darstellung der mindestens einen Simulation für die Person.

16. Verfahren nach einem der Ansprüche 10 bis 15, wobei der mindestens eine Messparameter an allen Rädern des Fahrzeugs (2) gemessen wird.

17. Verfahren nach einem der Ansprüche 10 bis 16, wobei der Schritt zum Messen mindestens einen der folgenden Schritte umfasst:
- Erfassen des Profils von einem der Räder (3) von einer Reifenwechselmaschine;
- Erfassen des Profils von einem der Räder (3) von einer Auswuchtmaschine;
- Erfassen der Unwucht von einem der Räder (3) von einer Auswuchtmaschine;
- Erfassen von durch das Rad (3) ausgeübten Kräften, wenn dieses sich dreht und örtlich einer Kompressionskraft unterliegt;
- Erfassen der charakteristischen Parameter der Lage der Räder (3) des Fahrzeugs (2),
um mindestens einen Messparameter von denen zu messen, die in der folgenden Liste enthalten sind: Radabweichung, Felgenschlag, Radialkraft, Restunwucht.

18. Verfahren nach einem der Ansprüche 10 bis 17, wobei die mindestens eine Simulation das Variieren des Werts des mindestens einen Modellparameters aus denen in der folgenden Liste umfasst: Positionierung des Rads (3), Positionierung des Reifens (4) an den Felgen, Passung von einzelnen Reifen (4) auf den jeweiligen Felgen, Lage des Rads (3), Konizität des Rads (3) und Einstellung von Bremsen, Stoßdämpfern und Federungen.

19. Verfahren nach einem der vorhergehenden Ansprüche 10 bis 18, umfassend einen Schritt zum Speichern der für den mindestens einen Messparameter gemessenen Werte.

20. Verfahren nach einem der vorhergehenden Ansprüche 10 bis 19, wobei die Informationen, die basierend auf dem Berechnungsschritt bereitgestellt werden, Elemente umfassen, die aus der folgenden Liste ausgewählt sind:
- Abziehen eines Reifens (4) von der Felge (3) und dessen Montieren, sodass er in die andere Richtung gewandt ist;
- Drehen des Reifens (4) relativ zur Felge (3) um eine Menge, die von einer Radservicemaschine zu berechnen ist;
- Korrigieren der Konizität des Reifens (4);
- Montieren der Räder (3) an vorgegebenen Positionen am Fahrzeug (2);
- mechanisches Einstellen des Rads (3) mithilfe von Bewegungsmitteln, sodass die charakteristischen Winkel der Fahrzeuglage modifiziert werden;
- Ersetzen oder Einstellen der Federung;
- Ersetzen oder Einstellen der Bremsen;
- Neuprogrammieren der elektronischen Steuergeräte, die Bremsen, Stabilität und Lage direkt am Fahrzeug steuern.

## Revendications

1. Appareil (1) pour fournir à la personne du service des pneus des informations pour régler statiquement des roues (3) ou pneus (4) d'un véhicule à moteur (2), comprenant :
- un module de stockage (5) de données avec accès à une base de données, définissant un modèle pour le fonctionnement d'un véhicule (2), comportant une pluralité de paramètres de modèle, par lesquels une trajectoire du véhicule peut être calculée à travers ledit modèle ;
- un module de commande (6) adapté pour recevoir des valeurs d'une pluralité de paramètres de mesure corrélés à un comportement sur route du véhicule (2) avec sa trajectoire, dans lequel au moins un desdits paramètres de mesure est mesuré dans une condition statique du véhicule (2),
fixer des valeurs de paramètres de modèle selon la valeur mesurée pour le paramètre de mesure afin de définir une configuration de départ des valeurs de paramètres de modèle, et
fixer au moins un paramètre d'évaluation corrélé aux paramètres de modèle et représentatif du comportement sur route du véhicule avec sa trajectoire, un critère d'évaluation étant défini pour ledit paramètre d'évaluation ;
- un module de traitement (7) adapté pour exécuter une pluralité de simulations du comportement sur route du véhicule (2) et de sa trajectoire en utilisant ledit modèle, afin de déterminer une configuration modifiée des valeurs des paramètres de modèle,
- le module de traitement (7) étant programmé pour fixer une première partie des paramètres de modèle comme constante aux valeurs de la configuration de départ et une seconde partie des paramètres de modèle comme variable,
le module de traitement (7) étant programmé pour automatiquement varier la valeur des paramètres de modèle fixés comme variables, dans lequel lesdits paramètres de modèle fixés comme variables comprennent au moins un des paramètres de modèle corrélé à une condition des roues (3) étant réglable par la personne du service des pneus,
le module de traitement (7) étant programmé pour exécuter une simulation du comportement sur route du véhicule (2) selon la configuration de départ et une simulation selon une configuration modifiée, dans lequel l'appareil déduit une première trajectoire du véhicule avec les paramètres de modèle dans leur configuration de départ et une seconde trajectoire du véhicule avec les paramètres de modèle modifiés par le module de traitement, le module de traitement (7) étant programmé pour exécuter une pluralité de simulations afin de déterminer la configuration modifiée des valeurs des paramètres de modèle par des répétitions successives,
le module de traitement (7) étant programmé pour calculer, à chaque répétition et simulation correspondante, une valeur correspondante pour le paramètre d'évaluation selon le résultat de la simulation respective, pour évaluer si le comportement du véhicule correspond au critère déterminé par le paramètre d'évaluation, afin de déterminer une configuration modifiée des valeurs des paramètres de modèle correspondant à un comportement sur route du véhicule (2) avec sa trajectoire, étant meilleur que le comportement sur route du véhicule avec sa trajectoire, correspondant à la configuration de départ, selon ledit au moins un paramètre d'évaluation ;
- un module (8) servant à présenter à la personne du service des pneus des informations de service pour régler ladite condition des roues (3) selon la configuration modifiée donnée.

2. Appareil selon la revendication 1, dans lequel le module de traitement (7) est programmé pour exécuter une pluralité de simulations afin de déterminer la configuration modifiée des valeurs des paramètres de modèle par répétitions successives.

3. Appareil selon la revendication 1 ou 2, dans lequel le module de commande (6) est adapté pour afficher à la personne une liste des paramètres d'évaluation et pour fixer ledit paramètre d'évaluation selon une sélection réalisée par la personne.

4. Appareil selon l'une quelconque des revendications précédentes, dans lequel le module de commande (6) est adapté pour afficher à la personne une liste contenant au moins un sous ensemble de paramètres de modèle et pour recevoir au moins un desdits paramètres sélectionnés par la personne à partir de la liste et dans lequel le module de traitement est programmé pour modifier ou, alternativement, pour laisser inchangés les paramètres de modèle sélectionnés par la personne pendant les simulations.

5. Appareil selon l'une quelconque des revendications précédentes, dans lequel le module de commande (6) est adapté pour recevoir de la personne des données utiles pour identifier le type de véhicule et pour fixer des valeurs d'un ou plusieurs paramètres de modèle selon le type de véhicule (2) identifié, afin de définir la configuration de départ des valeurs des paramètres de modèle.

6. Appareil selon l'une quelconque des revendications précédentes, dans lequel le module de présentation (8) est adapté pour mettre à disposition de la personne l'au moins une simulation exécutée par le module de traitement (7).

7. Appareil selon l'une quelconque des revendications précédentes, dans lequel le module de traitement (7) est adapté pour varier la valeur d'au moins un des paramètres de modèle inclus dans la liste suivante : position de la roue (3), position du pneu (4) sur les jantes, correspondance de chaque pneu (4) sur les jantes respectives, attitude de la roue (3), conicité de la roue (3) et réglage des freins, des amortisseurs et des ressorts de suspension.

8. Appareil selon l'une quelconque des revendications précédentes, dans lequel l'au moins un paramètre de mesure est inclus dans la liste suivante : dérive de la roue, voile de la roue, force radiale, déséquilibre résiduel.

9. Appareil selon l'une quelconque des revendications précédentes, dans lequel lesdites informations fournies sur la base de ladite étape de calcul comprennent des éléments sélectionnés à partir de la liste suivante :
- retirer un pneu (4) de la jante (3) et le monter orienté dans la direction opposée ;
- tourner le pneu (4) par rapport à la jante (3) selon une amplitude à calculer par une machine de service de roues ;
- corriger la conicité du pneu (4) ;
- monter les roues (3) dans des positions données sur le véhicule (2) ;
- régler mécaniquement les moyens de déplacement de la roue 3 de manière à modifier les angles caractéristiques de l'attitude du véhicule ;
- remplacer ou régler la suspension ;
- remplacer ou régler les freins ;
- reprogrammer les unités de commande électroniques qui commandent le freinage, la stabilité et l'attitude directement sur le véhicule.

10. Procédé pour fournir à la personne du service des pneus des informations pour régler statiquement des roues (3) ou pneus (4) d'un véhicule à moteur (2), comprenant les étapes suivantes :
- préparer une base de données définissant un modèle pour le fonctionnement du véhicule (2), le modèle comportant une pluralité de paramètres de modèle, par lesquels une trajectoire du véhicule peut être calculée à travers ledit modèle ;
- mesurer une valeur de pluralité de paramètres de mesure corrélés au comportement sur route du véhicule (2) avec sa trajectoire, dans lequel au moins un desdits paramètres de mesure est mesuré dans une condition statique du véhicule (2),
- fixer des valeurs de paramètres de modèle selon la valeur mesurée pour le paramètre de mesure afin de définir une configuration de départ des valeurs de paramètres de modèle, dans lequel une première partie des paramètres de modèle est fixée comme constante aux valeurs de la configuration de départ et une seconde partie des paramètres de modèle est fixée comme variable,
- fixer au moins un paramètre d'évaluation corrélé aux paramètres de modèle et représentatif du comportement sur route du véhicule (2) avec sa trajectoire, un critère d'évaluation étant défini pour ledit paramètre d'évaluation ;
- exécuter une pluralité de simulations du comportement sur route du véhicule (2) incluant sa trajectoire, en utilisant ledit modèle, en variant la valeur des paramètres de modèle fixés comme variables afin de déterminer la configuration modifiée des valeurs de paramètres de modèle, lesdits paramètres de modèle fixés comme variables comprenant la valeur d'au moins un des paramètres de modèle corrélés à une condition des roues (3) réglable par la personne du service des pneus, dans lequel une simulation du comportement sur route du véhicule (2) est exécutée selon la configuration de départ et une autre simulation est exécutée selon une configuration modifiée, dans lequel l'appareil déduit une première trajectoire du véhicule avec les paramètres de modèle dans leur configuration de départ et une seconde trajectoire du véhicule avec les paramètres de modèle modifiés par le module de traitement, le module de traitement (7) étant programmé pour exécuter une pluralité de simulations afin de déterminer la configuration modifiée des valeurs de paramètres de modèle par répétitions successives,
- calculer, à chaque répétition et simulation correspondante, une valeur correspondante du paramètre d'évaluation selon le résultat de la simulation respective, pour évaluer si le comportement du véhicule correspond au critère déterminé par le paramètre d'évaluation, afin de déterminer une configuration modifiée des paramètres de modèle correspondant à un comportement sur route du véhicule, avec sa trajectoire, étant meilleur que le comportement sur route du véhicule avec sa trajectoire, correspondant à la configuration de départ, selon ledit au moins un paramètre d'évaluation ;
- présenter à la personne du service des pneus des informations de service pour régler ladite condition des roues (3) selon la configuration modifiée donnée.

11. Procédé selon la revendication 10, dans lequel l'étape de simulation est répétée pendant une pluralité de fois, en variant la valeur de l'au moins un paramètre de modèle à différents moments, afin de déterminer la configuration modifiée des valeurs de paramètres de modèle par répétitions successives.

12. Procédé selon l'une quelconque des revendications de 10 à 11, dans lequel la fixation de l'au moins un paramètre d'évaluation se déroule en réponse à une sélection que la personne fait à partir d'une liste de paramètres d'évaluation prédéterminés.

13. Procédé selon l'une quelconque des revendications de 10 à 12, comprenant une étape, précédant l'étape de simulation, consistant à présenter à la personne une liste contenant au moins un sous-ensemble de paramètres de modèle, pour permettre à la personne de sélectionner au moins un des paramètres de la liste, et pour le fixer comme variable ou, alternativement, pour le laisser constant dans l'étape de simulation à suivre.

14. Procédé selon l'une quelconque des revendications de 10 à 13, comprenant une étape, précédant l'étape de simulation, consistant à présenter à la personne des informations utiles pour identifier le type de véhicule afin de fixer des valeurs d'un ou plusieurs des paramètres de modèle selon le type de véhicule identifié.

15. Procédé selon l'une quelconque des revendications de 10 à 14, comprenant une étape consistant à présenter à la personne une représentation visuelle de l'au moins une simulation.

16. Procédé selon l'une quelconque des revendications de 10 à 15, dans lequel l'au moins un paramètre de mesure est mesuré sur toutes les roues du véhicule (2).

17. Procédé selon l'une quelconque des revendications de 10 à 16, dans lequel l'étape de mesure comprend au moins une des étapes suivantes :
- capturer le profil d'une des roues (3) à partir d'une machine de changement de pneus ;
- capturer le profil d'une des roues (3) à partir d'une équilibreuse ;
- capturer les déséquilibres d'une des roues (3) à partir d'une équilibreuse ;
- capturer les forces appliquées par la roue (3) lorsqu'elle tourne et est soumise localement à une force de compression ;
- capturer les paramètres caractéristiques de l'attitude des roues (3) du véhicule (2).
afin de mesurer au moins un paramètre de mesure figurant parmi ceux dans la liste suivante : dérive de la roue, voile de la roue, force radiale, déséquilibre résiduel.

18. Procédé selon l'une quelconque des revendications de 10 à 17, dans lequel l'au moins une simulation comprend la variation de la valeur d'au moins un paramètre de modèle parmi ceux dans la liste suivante :
position de la roue (3), position du pneu (4) sur les jantes, correspondance de chaque pneu (4) sur les jantes respectives, attitude de la roue (3), conicité de la roue (3) et réglage des freins, des amortisseurs et des ressorts de suspension.

19. Procédé selon l'une quelconque des revendications de 10 à 18, comprenant une étape consistant à stocker les valeurs mesurées pour l'au moins un paramètre de mesure.

20. Procédé selon l'une quelconque des revendications de 10 à 19, dans lequel lesdites informations fournies sur la base de ladite étape de calcul comprennent des éléments sélectionnés à partir de la liste suivante :
- retirer un pneu (4) de la jante (3) et le monter orienté dans la direction opposée ;
- tourner le pneu (4) par rapport à la jante (3) selon une amplitude à calculer par une machine de service de roues ;
- corriger la conicité du pneu (4) ;
- monter les roues (3) dans des positions données sur le véhicule (2) ;
- régler mécaniquement les moyens de déplacement de la roue (3) de manière à modifier les angles caractéristiques de l'attitude du véhicule ;
- remplacer ou régler la suspension ;
- remplacer ou régler les freins ;
- reprogrammer les unités de commande électroniques qui commandent le freinage, la stabilité et l'attitude directement sur le véhicule.
